# FASCICULE DE BREVET EUROPEEN

(11) **EP 2 566 036 B1**
(45) Date de publication et mention de la délivrance du brevet: **28.04.2021**
(21) Numéro de dépôt: 12182335.5
(22) Date de dépôt: 30.08.2012
(51) Int. Cl.: H02M 7/5387, H02M 1/36, H05B 6/12

(54) **Procédé et dispositif de commande de deux éléments de puissance, notamment pour appareil de cuisson à induction**
Verfahren und Vorrichtung zur Steuerung von zwei Leistungschaltern, insbesondere für ein Induktionskochgerät
Method and device for controlling two power switches, especially for induction cooker

(30) Priorité: 30.08.2011 FR 1157657
(43) Date de publication de la demande: 06.03.2013
(73) Titulaire: Groupe Brandt, 92500 Rueil-Malmaison (FR)
(72) Inventeur: Goumy, Cédric, 45190 Tavers (FR); Furcy, Julien, 45140 ORMES (FR); Alirol, Etienne, 45380 La Chapelle Saint Mesmin (FR)
(74) Mandataire: Santarelli

(56) Documents cités:
- JP-A- 2004 171 934
- YOUNG-SUP KWON ET AL: "Half-bridge series resonant inverter for induction heating applications with load-adaptive PFM control strategy", APPLIED POWER ELECTRONICS CONFERENCE AND EXPOSITION, 1999. APEC '99. F OURTEENTH ANNUAL DALLAS, TX, USA 14-18 MARCH 1999, PISCATAWAY, NJ, USA,IEEE, US, vol. 1, 14 mars 1999 (1999-03-14), pages 575-581, XP010323512, ISBN: 978-0-7803-5160-8

## Description

La présente invention concerne un procédé et un dispositif de commande de deux éléments de puissance montés en demi-pont pour générer un courant électrique alternatif dans un inducteur.

Elle concerne également un appareil de cuisson à induction adapté à mettre en œuvre ce procédé de commande.

De manière générale, la présente invention concerne le domaine de l'alimentation électrique d'un appareil de cuisson à induction, telle qu'une table à induction, comprenant une ou plusieurs zones de cuisson équipées d'un inducteur.

Chaque zone de cuisson est pilotée par deux éléments de puissance montés selon une topologie de circuit en demi-pont.

Par exemple, les deux éléments de puissance montés en demi-pont, permettant de commander l'inducteur, sont des composants IGBT (acronyme du terme anglo-saxon Insulated Gate Bipolar Transistor).

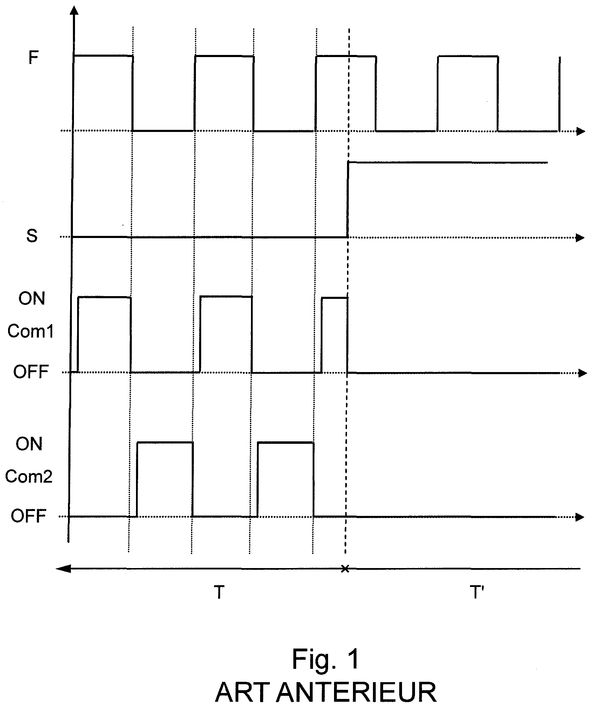

Afin de générer un courant électrique alternatif dans l'inducteur, les deux éléments de puissance sont pilotés par un signal de commande en fréquence F, tel qu'illustré à la figure 1.

A partir de ce signal de commande en fréquence F, les moyens de pilotage des éléments de puissance sont adaptés à générer un premier signal de commande Com1 d'un premier élément de puissance et un second signal de commande Com2 d'un second élément de puissance pour positionner alternativement ces deux éléments de puissance respectivement dans un état passant ON et un état bloqué OFF.

Cette étape de pilotage des deux éléments de puissance est illustrée à la figure 1 sur une première période de temps T.

Grâce au pilotage alternatif des deux éléments de puissance à une fréquence donnée F, un courant alternatif est généré et circule dans l'inducteur.

De manière classique, un courant induit est alors généré dans un récipient placé au-dessus de cet inducteur, le récipient s'échauffant lui-même par effet Joule du fait de sa résistance.

Le document JP 2004-171934 et le document "Half-Bridge Series Resonant Inverter for Induction Heating Applications with Load-Adaptive PFM Control Strategy" Kwon, dans Applied Power Electronics Conférence 1999, Dallas; divulguent des examples des appareils de cuisson à induction et ses procédés de commande.

Classiquement, dans l'art antérieur, et comme illustré sur la deuxième période de temps T' à la figure 1, l'arrêt du courant alternatif généré dans l'inducteur est obtenu en bloquant simultanément les deux éléments de puissance, c'est-à-dire en plaçant les deux signaux de commande Com1, Com2 à un niveau logique correspondant à l'état bloqué OFF des deux éléments de puissance.

Ainsi, traditionnellement, l'extinction du courant alternatif requiert le blocage simultané des deux éléments de puissance.

Par ailleurs, comme illustré sur la figure 1, la commande des deux éléments de puissance montés en demi-pont nécessite, outre le signal de commande en fréquence F, un signal logique S permettant le blocage simultané des deux éléments de puissance.

Ainsi, le signal logique S vient forcer le passage à l'état bloqué des deux éléments de puissance, le signal de commande en fréquence demeurant inchangé dans le temps.

La présente invention a pour but de résoudre au moins un des inconvénients précités et de simplifier la commande de deux éléments de puissance montés en demi-pont.

Selon un premier aspect, la présente invention concerne un procédé de commande de deux éléments de puissance montés en demi-pont pour générer un courant électrique alternatif dans un inducteur, comprenant une étape de pilotage des deux éléments de puissance par un signal de commande en fréquence adapté à positionner alternativement les deux éléments de puissance respectivement dans un état passant et un état bloqué.

Selon l'invention, ce procédé de commande comprend une étape d'extinction du courant électrique alternatif généré dans l'inducteur, dans laquelle un desdits deux éléments de puissance est maintenu dans un état passant et l'autre desdits deux éléments de puissance est maintenu dans un état bloqué par ledit signal de commande en fréquence, ledit signal de commande en fréquence étant un signal alternatif entre un état haut et un état bas, ledit signal de commande en fréquence étant maintenu dans un état indifféremment choisi parmi l'état haut et l'état bas lors de l'étape d'extinction dudit courant électrique alternatif.

Ainsi, la Demanderesse a pu montrer qu'il n'était pas nécessaire de bloquer simultanément les deux éléments de puissance pour obtenir l'extinction du courant électrique alternatif dans un inducteur.

Dès lors qu'un élément de puissance est maintenu dans un état passant et que l'autre élément de puissance est maintenu dans un état bloqué, il est possible d'obtenir l'extinction du courant électrique alternatif.

En outre, le procédé de commande requiert l'utilisation d'un seul signal pour piloter les deux éléments de puissance.

L'obtention de l'extinction du courant électrique alternatif peut ainsi être obtenue simplement par la modification du signal unique de commande en fréquence.

Contrairement à l'état de la technique, le signal de commande en fréquence suffit pour permettre le pilotage des deux éléments de puissance, à la fois pour générer le courant électrique alternatif et pour obtenir l'extinction de celui-ci dans l'inducteur.

Selon un mode de réalisation avantageux de l'invention, le procédé de commande comprend en outre une étape de mise en sécurité des deux éléments de puissance après l'étape d'extinction du courant électrique alternatif, dans laquelle les deux éléments de puissance sont maintenus dans un état bloqué.

Ainsi, alors que l'extinction du courant alternatif dans l'inducteur peut être obtenue tout en maintenant un des éléments de puissance dans un état passant, il est préférable, après l'étape d'extinction du courant alternatif dans l'inducteur, de bloquer simultanément les deux éléments de puissance afin d'éviter tout risque de court-circuit dans le système à l'arrêt.

En pratique, les deux éléments de puissance sont maintenus dans un état bloqué par un signal logique de valeur prédéfinie, activé par le signal de commande en fréquence.

Ainsi, l'activation du signal logique permettant de basculer et maintenir dans un état bloqué les deux éléments de puissance peut être obtenue directement en utilisant le signal de commande en fréquence et sans requérir un signal de commande supplémentaire dans le système.

Selon un second aspect, la présente invention concerne un dispositif de commande de deux éléments de puissance montés en demi-pont pour générer un courant électrique alternatif dans un inducteur, comprenant des moyens de pilotage des deux éléments de puissance par un signal de commande en fréquence adapté à positionner alternativement les deux éléments de puissance respectivement dans un état passant et un état bloqué.

Selon l'invention, les moyens de pilotage sont adaptés, lors d'une étape d'extinction du courant électrique alternatif généré dans l'inducteur, à maintenir par ledit signal de commande en fréquence un desdits deux éléments de puissance dans un état passant et l'autre desdits deux éléments de puissance dans un état bloqué, ledit signal de commande en fréquence étant un signal alternatif entre un état haut et un état bas, le signal de commande en fréquence étant maintenu dans un état choisi indifféremment parmi l'état haut et l'état bas par les moyens de pilotage lors de l'étape d'extinction du courant électrique alternatif.

Ce dispositif de commande présente des caractéristiques et avantages analogues à ceux décrits précédemment en relation avec le procédé de commande selon l'invention.

Finalement, la présente invention concerne selon un troisième aspect un appareil de cuisson à induction comprenant au moins une zone de cuisson équipée d'un inducteur.

Selon l'invention, cet appareil de cuisson comporte un dispositif de commande de deux éléments de puissance montés en demi-pont pour générer un courant électrique alternatif dans un inducteur, tel que décrit précédemment en relation avec le dispositif de commande.

Cet appareil de cuisson présente également des caractéristiques et avantages analogues à ceux décrits précédemment en relation avec le procédé de commande selon l'invention.

D'autres particularités et avantages de l'invention apparaîtront encore dans la description ci-après.

Aux dessins annexés, donnés à titre d'exemples non limitatifs :
- la figure 1 illustre schématiquement les signaux de pilotage d'une topologie demi-pont dans l'art antérieur ;
- la figure 2 est un schéma illustrant le montage de deux éléments de puissance en demi-pont dans un appareil de cuisson à induction selon un mode de réalisation de l'invention ;
- la figure 3 est un schéma bloc illustrant un dispositif de commande des deux éléments de puissance de la figure 2, selon un premier mode de réalisation de l'invention ;
- les figures 4A et AB sont des chronogrammes illustrant les signaux de pilotage des éléments de puissance montés en demi-pont selon deux modes de fonctionnement du procédé de commande selon le premier mode de réalisation de l'invention ;
- la figure 5 illustre différents signaux électriques du circuit de la figure 2 pendant la génération et l'extinction d'un courant électrique alternatif selon un mode de réalisation du procédé de commande ;
- la figure 6 est un agrandissement sur l'échelle du temps de la figure 5 ;
- la figure 7 est un schéma bloc illustrant un dispositif de commande de deux éléments de puissance de la figure 2, selon un second mode de réalisation de l'invention ;
- la figure 8 est un schéma illustrant un exemple de réalisation d'un circuit d'activation du dispositif de commande de la figure 7 ; et
- la figure 9 est un chronogramme illustrant les signaux de pilotage des éléments de puissance montés en demi-pont selon un mode de fonctionnement du procédé de commande selon le second mode de réalisation de l'invention.

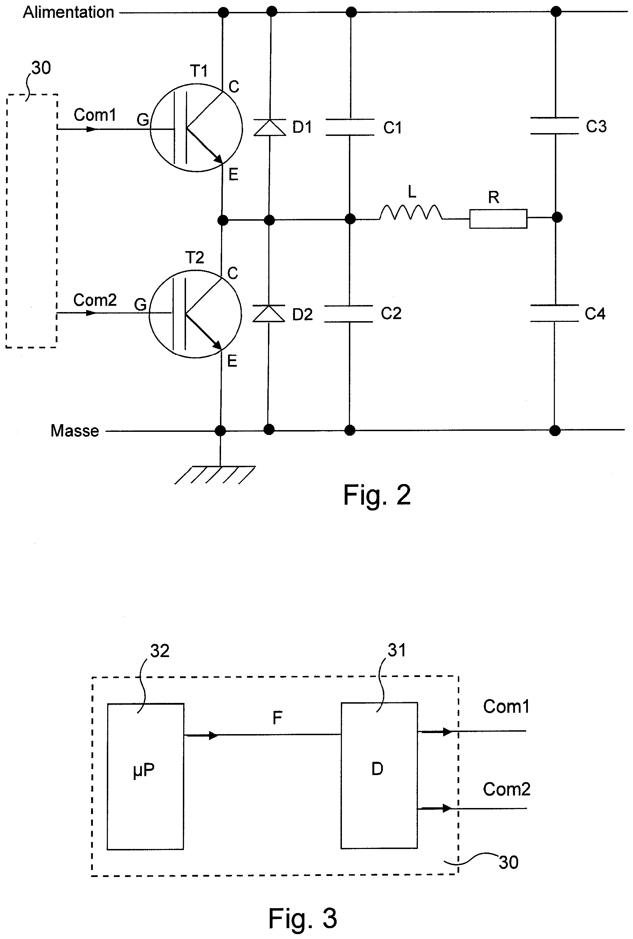

On va décrire tout d'abord en référence à la figure 2 le montage de deux éléments de puissance en demi-pont dans un appareil de cuisson à induction selon un mode de réalisation de l'invention.

L'appareil de cuisson à induction peut être notamment une table à induction comprenant au moins une zone de cuisson comprenant un inducteur L.

Bien entendu, de préférence, l'appareil de cuisson comporte plusieurs zones de cuisson, chaque zone de cuisson étant pilotée par deux éléments de puissance.

Dans l'exemple illustré à la figure 2, l'inducteur L représente schématiquement la zone de cuisson par induction et peut correspondre à un ou plusieurs bobinages d'inducteur montés en série, constituant ainsi un foyer de cuisson.

L'inducteur L est piloté par deux éléments de puissance T1, T2 montés en demi-pont pour générer un courant électrique alternatif dans l'inducteur L, appelé dans la suite courant inducteur I.

A titre d'exemple non limitatif, les éléments de puissance sont des composants IGBT.

Le montage en demi-pont des deux éléments de puissance T1, T2 est classique et est présenté succinctement ci-après.

Chaque élément de puissance T1, T2 est monté en parallèle entre son collecteur C et son émetteur E à une diode de roue libre D1, D2 et un condensateur d'aide à la commutation C1, C2.

Des condensateurs de résonance, C3, C4 sont montés pour constituer un circuit résonnant avec l'inducteur L auquel est associé une résistance R représentant la résistance d'un récipient placé sur la zone de cuisson, au-dessus de l'inducteur L.

De manière connue, le pilotage des deux éléments de puissance T1, T2 par un signal de commande à une fréquence donnée F, permet de positionner alternativement les deux éléments de puissance T1, T2 dans un état passant et dans un état bloqué, et de générer ainsi un courant alternatif circulant dans l'inducteur L.

On génère ainsi un courant induit dans le récipient qui s'échauffe par effet Joule du fait de sa résistance R.

Le pilotage des éléments de puissance T1, T2 est réalisé à partir de moyens de pilotage 30 tels qu'illustrés en détail à la figure 3.

Les signaux de commande Com1, Com2 respectivement adressés aux éléments de puissance T1, T2 sont générés par les moyens de pilotage 30.

Ces moyens de pilotage 30 comportent dans ce mode de réalisation un contrôleur 31 (également appelé en terminologie anglosaxonne *"Driver*"), lui-même commandé par un microprocesseur 32.

Dans ce mode de réalisation, le microprocesseur 32 commande le contrôleur 31 par un unique signal de commande en fréquence F.

Le signal de commande en fréquence F est un signal alternatif entre un état haut et un état bas.

Dans ce mode de réalisation, le signal de commande en fréquence F est un signal carré.

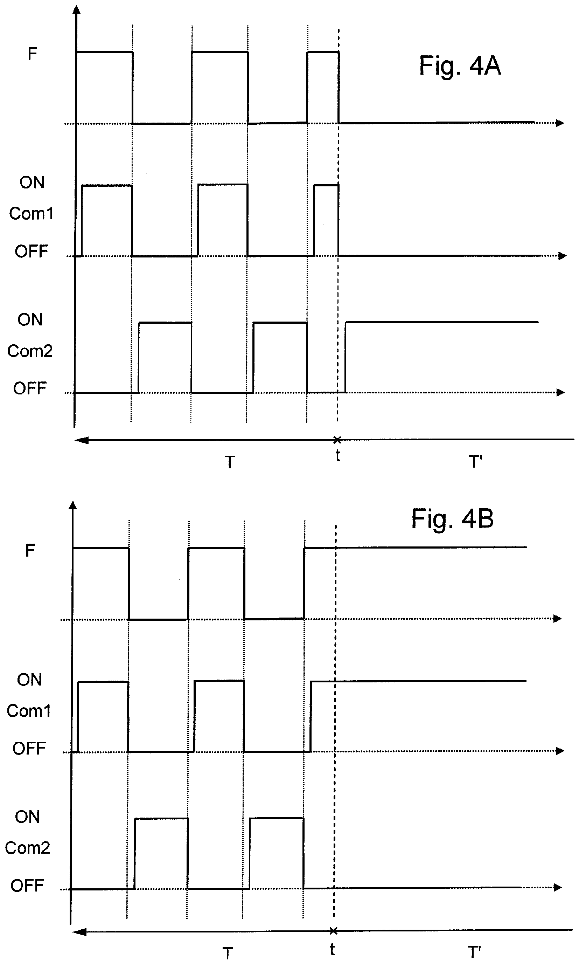

On a illustré ainsi aux figures 4A et 4B, sur une première période de temps T, le fonctionnement alterné des éléments de puissance T1, T2 placés respectivement dans un état passant ON et un état bloqué OFF.

Ainsi, comme bien illustré aux figures 4A et 4B, lorsque le signal de commande Com1 du premier élément de puissance T1 adresse un état passant ON au premier élément de puissance T1, le signal de commande Com2 du second élément de puissance T2 adresse un état bloqué OFF au second élément de puissance T2, et vice versa.

Lorsque le signal de commande en fréquence F bascule d'un état haut à un état bas, les signaux de commande Com1, Com2 sont alternés afin de basculer chaque élément de puissance d'un état passant ON à un état bloqué OFF, et vice versa.

On a illustré également aux figures 4A et 4B une deuxième période de temps T' correspondant à une phase d'extinction du courant alternatif généré dans l'inducteur L.

Comme bien illustré sur ces figures, lors de l'étape d'extinction débutant à un instant donné t, les moyens de pilotage 30 sont adaptés à maintenir un des deux éléments de puissance T1, T2 dans un état passant ON et l'autre des deux éléments de puissance T1, T2 dans un état bloqué OFF.

Par exemple, lors de l'étape d'extinction, telle qu'illustrée à la figure 4A, le premier élément de puissance T1 est maintenu dans un état bloqué OFF alors que le second élément de puissance T2 est maintenu dans un état passant ON.

La figure 4B illustre la situation inverse, dans laquelle le premier élément de puissance T1 est maintenu dans un état passant ON et le second élément de puissance T2 est maintenu dans un état bloqué OFF.

Les moyens de pilotage 30 sont adaptés à piloter les éléments de puissance T1, T2 par le signal de commande en fréquence F.

Plus précisément, le signal de commande en fréquence F étant ici un signal alternatif entre un état haut et un état bas, il est maintenu en sortie du microprocesseur 32 soit à un état bas (figure 4A) soit à un état haut (figure 4B) à partir de l'instant donné t débutant l'étape d'extinction.

Ainsi, le pilotage des deux éléments de puissance T1, T2 peut être réalisé à l'aide d'un unique signal de commande en fréquence F, et le microprocesseur 32 peut ne comporter qu'une seule sortie.

Ce montage est notamment intéressant lorsque le pilotage de plusieurs topologies demi-pont par un microprocesseur est mis en œuvre dans un appareil de cuisson.

L'utilisation d'une seule sortie pour le pilotage de chaque demi-pont permet ainsi de diminuer le coût de réalisation et l'encombrement de la carte électronique de cet appareil de cuisson.

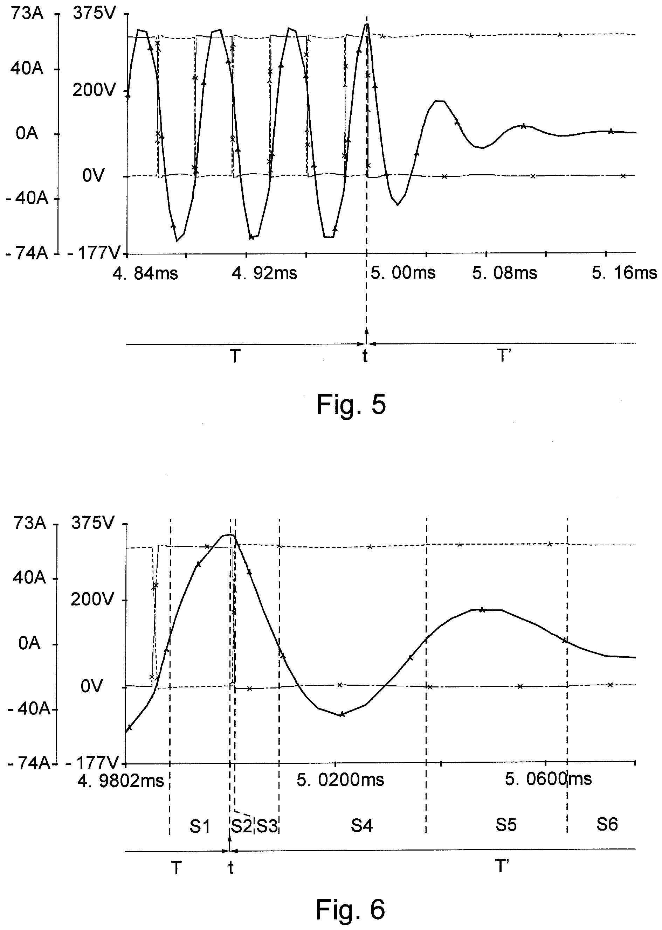

On va montrer à présent en référence aux figures 5 et 6 que le maintien dans un état passant ON de l'un des éléments de puissance T1, T2 et le maintien dans un état bloqué OFF de l'autre élément de puissance T1, T2 conduit bien à l'extinction du courant inducteur I dans l'inducteur L.

On a illustré aux figures 5 et 6 le mode de réalisation correspondant à la situation décrite précédemment en relation avec la figure 4A, c'est-à-dire lorsque le premier élément de puissance T1 est maintenu dans un état bloqué OFF et le second élément de puissance T2 est maintenu dans un état passant ON.

Bien entendu, l'explication faite ci-dessus peut se transposer à l'identique pour la situation inverse illustrée à la figure 4B.

A titre d'exemple non limitatif, le signal de commande en fréquence F a ici une fréquence de 20 kHz.

Le courant inducteur I est illustré par une courbe en trait continu.

La tension entre le collecteur C et l'émetteur E du premier élément de puissance T1 est représentée en trait pointillé et la tension entre le collecteur C et l'émetteur E du second élément de puissance T2 est illustrée en trait mixte.

Sur la première période de temps T, la figure 5 illustre l'alternance des tensions aux bornes des premier et second éléments de puissance T1, T2 permettant de manière classique de générer le courant électrique alternatif dans l'inducteur L.

A l'instant donné t, par exemple t = 5 ms, une phase d'extinction du courant inducteur I est mise en œuvre sur une deuxième période de temps T'.

Comme indiqué précédemment, la première commande Com1 adressée à la grille G du premier élément de puissance T1 est mise à l'état bloqué OFF et la seconde commande Com2 adressée à la grille G du second élément de puissance T2 est mise à l'état passant ON lors de l'étape d'extinction.

La figure 5 illustre ainsi sur la deuxième période de temps T' l'atténuation puis l'extinction du courant inducteur I.

La figure 6 illustre plus en détail les différentes étapes intervenant lors de l'extinction de ce courant inducteur I.

Ainsi, dans une première étape S1, avant l'instant donné t de la phase d'extinction, le premier élément de puissance T1 est dans un état passant ON.

A l'instant donné t, le signal de commande en fréquence F est mis à l'état bas comme illustré à la figure 4A.

Ainsi, le premier élément de puissance T1 est mis dans un état bloqué OFF.

Le courant inducteur I circule alors dans les deux condensateurs d'aide à la commutation C1, C2.

Ainsi, comme bien illustré à la deuxième étape S2, la tension entre le collecteur C et l'émetteur E du premier élément de puissance T1 augmente et la tension entre le collecteur C et l'émetteur E du second élément de puissance T2 diminue.

A la troisième étape S3, la tension entre le collecteur C et l'émetteur E du second élément de puissance T2 devient négative.

La diode de roue libre D2 associée au second élément de puissance T2 devient alors passante.

Le courant inducteur I circule alors dans la diode de roue libre D2 jusqu'à l'annulation de ce courant.

A la quatrième étape S4, lorsque le courant inducteur I s'annule et devient négatif, la diode de roue libre D2 se bloque et le second élément de puissance T2 devient alors passant.

Le courant inducteur I circule alors dans le second élément de puissance T2, jusqu'à s'annuler et devenir de nouveau positif.

Lorsque le courant inducteur I s'annule et devient positif, au début de la cinquième étape S5, le courant inducteur I circule à nouveau dans la diode de roue libre D2 associée au second élément de puissance T2, jusqu'à nouveau s'annuler et devenir négatif au début de la sixième étape S6.

Lors de cette sixième étape S6, le courant inducteur I circule alors de nouveau dans le second élément de puissance T2. Les étapes S5 et S6 se répètent ainsi jusqu'à annulation complète du courant inducteur I.

Ainsi, après la commande d'extinction mise en œuvre à l'instant t, le courant inducteur I circule uniquement dans le second élément de puissance T2 et la diode de roue libre associée D2 jusqu'à son extinction.

Grâce à l'invention, il est ainsi possible d'obtenir l'extinction du courant inducteur I par le blocage d'un seul des deux éléments de puissance T1, T2.

Le blocage d'un des éléments de puissance T1, T2 peut être obtenu par un unique signal de commande en fréquence F maintenu dans un état haut ou dans un état bas lors de l'étape d'extinction du courant inducteur I.

Ainsi, le maintien dans un état bloqué OFF d'un seul des deux éléments de puissance T1, T2 suffit à arrêter le courant inducteur I circulant dans l'inducteur L.

Toutefois, pour des raisons sécuritaires, il est possible dans un second mode de réalisation de l'invention de prévoir une étape de mise en sécurité des deux éléments de puissance T1, T2 après l'étape d'extinction du courant électrique alternatif.

Cette mise en sécurité est obtenue en maintenant les deux éléments de puissance T1, T2 dans un état bloqué OFF.

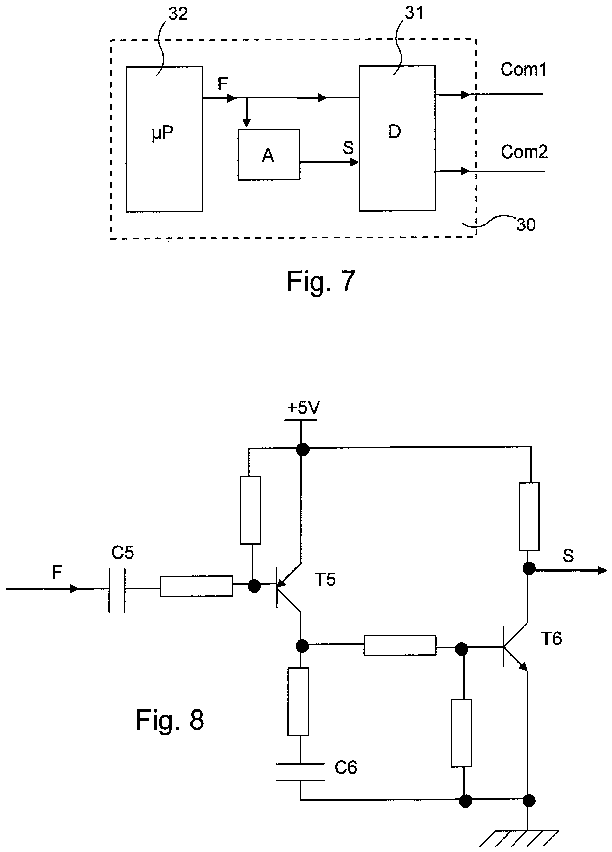

On a illustré ainsi à la figure 7 un dispositif de commande selon ce second mode de réalisation de l'invention.

Ce dispositif de commande présente des éléments analogues à ceux décrits précédemment en relation à la figure 3.

Les moyens de pilotage 30 comportent en outre un circuit d'activation A d'un signal logique S adressé en entrée du contrôleur 31 des éléments de puissance T1, T2.

Ce signal logique S est activé directement par le signal de commande en fréquence F au travers du circuit d'activation A.

En pratique, le signal logique S peut prendre deux valeurs 0 ou 1, une valeur prédéfinie, par exemple égale à 1, correspondant à une commande adressée au contrôleur 31 pour obtenir le maintien des deux éléments de puissance T1, T2 dans un état bloqué OFF.

Ainsi, le signal de commande de fréquence F peut être utilisé directement pour activer ou désactiver une entrée de coupure au niveau du contrôleur 31 (entrée *"shut down"* en terminologie anglo-saxonne).

On a illustré à la figure 8 un exemple de réalisation, non limitatif, du circuit d'activation A permettant, à partir du signal de commande en fréquence F, de générer le signal logique S.

Le signal de commande de fréquence F est adressé en entrée d'un premier transistor T5, au travers d'une première capacité C5.

Ce premier transistor T5 est relié par son collecteur à une source de tension continue, par exemple égale à 5 V.

L'émetteur du premier transistor T5 est monté au travers d'une résistance sur une seconde capacité C6, elle-même reliée au travers d'un pont diviseur de tension à la base d'un second transistor T6 monté à l'entrée du contrôleur 31.

Ainsi, lorsque le signal de commande en fréquence F est un signal alternatif, et par exemple un signal carré de fréquence de l'ordre de 20 kHz, le premier transistor T5 commute à la fréquence F et charge la seconde capacité C6 à la valeur de 5 V.

Cette tension aux bornes de la seconde capacité C6 permet de maintenir le second transistor T6 dans un état ON.

L'entrée du contrôleur 31 est ainsi maintenue à une valeur 0, correspondant à une valeur inactive du signal logique S.

Dans ces conditions, les signaux de commande Com1, Com2 des deux éléments de puissance T1, T2 sont contrôlés librement par le contrôleur 31, et comme indiqué précédemment, directement par le signal de commande en fréquence F adressé au contrôleur 31.

En revanche, lorsque le signal de commande de fréquence F présente une fréquence nulle, c'est-à-dire que le signal de commande en fréquence F est maintenu à un état haut ou à un état bas, le premier transistor T5 est dans un état bloqué OFF. La seconde capacité C6 se décharge alors dans le circuit d'activation A, la tension à ses bornes diminuant ici de 5V jusqu'à une valeur nulle pendant un intervalle de temps Δ. A la fin de cet intervalle de temps Δ, correspondant à la durée de la décharge de la seconde capacité C6, le second transistor T6 est basculé et maintenu dans un état bloqué OFF de telle sorte que le signal logique S en entrée du contrôleur 31 est activé et présente la valeur prédéfinie 1.

Ce signal logique S adressé au contrôleur 31 commande ainsi les deux signaux de commande Com1, Com2 pour adresser un état bloqué OFF aux deux éléments de puissance T1, T2.

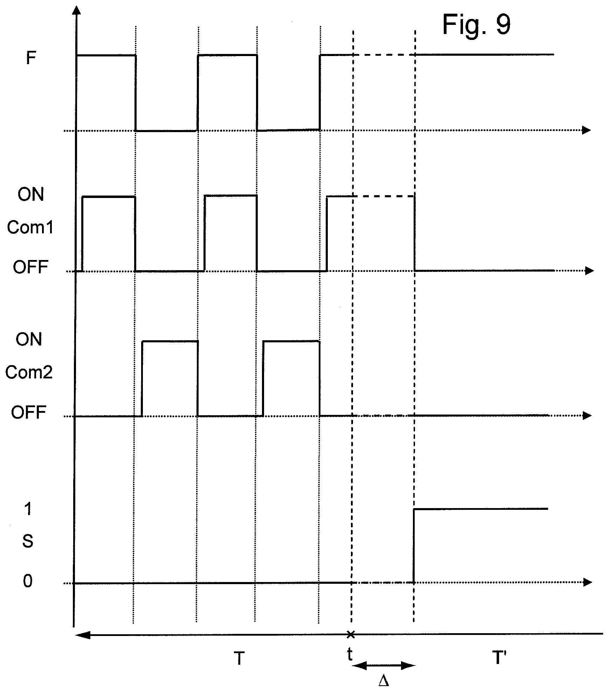

On a illustré à la figure 9 un chronogramme illustrant le fonctionnement du dispositif de commande de la figure 7.

Dans cet exemple de réalisation, on notera que l'extinction du courant est obtenue par le maintien dans un état haut du signal de commande en fréquence F, comme décrit précédemment en relation avec la figure 4B.

Bien entendu, un fonctionnement analogue peut également être obtenu par le maintien du signal de commande en fréquence F à un état bas comme illustré à la figure 4A.

Comme expliqué précédemment, en maintenant à partir d'un instant t dans un état haut le signal de commande en fréquence F, le premier élément de puissance T1 est maintenu dans l'état passant ON et le second élément de puissance T2 est maintenu dans un état bloqué OFF de telle sorte qu'on obtient l'extinction du courant alternatif généré dans l'inducteur.

Simultanément, le signal de commande en fréquence F étant également adressé au travers du circuit d'activation A décrit précédemment à l'entrée du contrôleur 31, on génère, après l'intervalle de temps Δ à compter de l'instant t, un signal logique S de valeur prédéfinie, ici égale à 1, permettant de placer et maintenir dans un état bloqué OFF les deux éléments de puissance T1, T2.

On notera que cet intervalle de temps Δ est de l'ordre de quelques millisecondes, et par exemple égal à 10 millisecondes, c'est-à-dire relativement grand par rapport à la période de l'ordre de 50 microsecondes du signal de commande en fréquence F.

Ainsi, l'extinction du courant alternatif dans l'inducteur peut être obtenue très rapidement grâce au pilotage du contrôleur 31 directement à partir du signal de commande en fréquence F, la mise en sécurité des deux éléments de puissance T1, T2 intervenant ensuite, après l'étape d'extinction du courant alternatif dans l'inducteur.

Bien entendu, la présente invention n'est pas limitée aux exemples de réalisation décrits précédemment.

En particulier, le procédé de commande décrit précédemment peut être mis en oeuvre dans tout type d'appareil de cuisson à induction, pour commander un inducteur piloté par une topologie en demi-pont.

Par ailleurs, l'invention n'est pas limitée aux exemples de réalisation dans lesquels les éléments de puissance T1, T2 sont maintenus dans un état passant et dans un état bloqué lors de l'étape d'extinction du courant grâce à un unique signal de commande en fréquence.

Un signal spécifique pourrait également être adressé par le microprocesseur 32 au contrôleur 31 pour obtenir le maintien de l'un des éléments de puissance dans un état passant et de l'autre des éléments de puissance dans un état bloqué afin d'obtenir l'extinction du courant inducteur.

## Revendications

1. Procédé de commande de deux éléments de puissance (T1, T2) montés en demi-pont pour générer un courant électrique alternatif (I) dans un inducteur (L), comprenant une étape de pilotage desdits deux éléments de puissance (T1, T2) par un signal de commande en fréquence (F) adapté à positionner alternativement les deux éléments de puissance (T1, T2) respectivement dans un état passant (ON) et un état bloqué (OFF), **caractérisé en ce qu'**il comprend une étape d'extinction dudit courant électrique alternatif (I) généré dans l'inducteur (L), dans laquelle un desdits deux éléments de puissance (T1 ; T2) est maintenu dans un état passant (ON) et l'autre desdits deux éléments de puissance (T2 ; T1) est maintenu dans un état bloqué (OFF) par ledit signal de commande en fréquence (F), ledit signal de commande en fréquence (F) étant un signal alternatif entre un état haut et un état bas, ledit signal de commande en fréquence (F) étant maintenu dans un état indifféremment choisi parmi l'état haut et l'état bas lors de l'étape d'extinction dudit courant électrique alternatif (I).

2. Procédé de commande conforme à la revendication 1, **caractérisé en ce qu'**il comprend en outre une étape de mise en sécurité desdits deux éléments de puissance (T1, T2) après ladite étape d'extinction du courant électrique alternatif, dans laquelle lesdits deux éléments de puissance (T1, T2) sont maintenus dans un état bloqué (OFF).

3. Procédé de commande conforme à la revendication 2, **caractérisé en ce que** lesdits deux éléments de puissance (T1, T2) sont maintenus dans un état bloqué (OFF) par un signal logique (S) de valeur prédéfinie, activé par ledit signal de commande en fréquence (F).

4. Procédé de commande conforme à l'une des revendications 1 à 3, **caractérisé en ce que** ledit signal de commande en fréquence (F) est un signal carré.

5. Dispositif de commande de deux éléments de puissance (T1, T2) montés en demi-pont pour générer un courant électrique alternatif (I) dans un inducteur (L), comprenant des moyens de pilotage (30) desdits deux éléments de puissance (T1, T2) par un signal de commande en fréquence (F) adapté à positionner alternativement les deux éléments de puissance (T1, T2) respectivement dans un état passant (ON) et un état bloqué (OFF), **caractérisé en ce que** lesdits moyens de pilotage (30) sont adaptés, lors d'une étape d'extinction dudit courant électrique alternatif (I) généré dans l'inducteur (L), à maintenir par ledit signal de commande en fréquence (F) un desdits deux éléments de puissance (T1 ; T2) dans un état passant (ON) et l'autre desdits deux éléments de puissance (T2 ; T1) dans un état bloqué (OFF), ledit signal de commande en fréquence (F) étant un signal alternatif entre un état haut et un état bas, le signal de commande en fréquence (F) étant maintenu dans un état choisi indifféremment parmi l'état haut et l'état bas par les moyens de pilotage (30) lors de l'étape d'extinction du courant électrique alternatif (I).

6. Dispositif de commande conforme à la revendication 5, **caractérisé en ce que** lesdits moyens de pilotage (30) comprennent un circuit d'activation (A) d'un signal logique (S) en fonction dudit signal de commande en fréquence (F), lesdits deux éléments de puissance (T1, T2) étant maintenus dans un état bloqué (OFF) pour une valeur prédéfinie dudit signal logique (S).

7. Dispositif de commande conforme à la revendication 6, **caractérisé en ce que** ledit signal de commande en fréquence (F) est un signal alternatif entre un état haut et un état bas, le signal de commande en fréquence (F) étant maintenu à un état haut ou un état bas par les moyens de pilotage (30) lors de l'étape d'extinction du courant électrique alternatif (I), ladite valeur prédéfinie du signal logique (S) étant activée par ledit circuit d'activation (A) lorsque le signal de commande en fréquence (F) est maintenu à un état haut ou à un état bas.

8. Appareil de cuisson à induction comprenant au moins une zone de cuisson équipée d'un inducteur (L), **caractérisé en ce qu'**il comporte un dispositif de commande (30) de deux éléments de puissance (T1, T2) montés en demi-pont pour générer un courant électrique alternatif (I) dans ledit inducteur (L) conformément à l'une des revendications 5 à 7.

9. Appareil de cuisson conforme à la revendication 8, **caractérisé en ce que** lesdits éléments de puissance (T1, T2) sont des composants IGBT.

## Patentansprüche

1. Verfahren zum Steuern von zwei Leistungselementen (T1, T2), die zum Erzeugen eines elektrischen Wechselstroms (I) in einem Induktor (L) in Halbbrückenschaltung angeordnet sind, umfassend einen Schritt des Ansteuerns der beiden Leistungselemente (T1, T2) durch ein Frequenzsteuersignal (F), das dazu geeignet ist, die beiden Leistungselemente (T1, T2) jeweils abwechselnd in einen Durchgangszustand (ON) und einen Sperrzustand (OFF) zu versetzen, **dadurch gekennzeichnet, dass** es einen Schritt des Abschaltens des in dem Induktor (L) erzeugten elektrischen Wechselstroms (I) umfasst, wobei durch das Frequenzsteuersignal (F) eines der beiden Leistungselemente (T1; T2) in einem Durchgangszustand (ON) und das andere der beiden Leistungselemente (T2; T1) in einem Sperrzustand (OFF) gehalten werden, wobei das Frequenzsteuersignal (F) ein zwischen einem hohen Zustand und einem niedrigen Zustand wechselndes Signal ist, wobei das Frequenzsteuersignal (F) während des Schritts des Abschaltens des elektrischen Wechselstroms (I) in einem indifferent ausgewählten Zustand aus hohem Zustand und niedrigem Zustand gehalten wird.

2. Steuerungsverfahren nach Anspruch 1, **dadurch gekennzeichnet, dass** es ferner einen Schritt des Absicherns der beiden Leistungselemente (T1, T2) nach dem Schritt des Abschaltens des elektrischen Wechselstroms umfasst, wobei die beiden Leistungselemente (T1, T2) in einem Sperrzustand (OFF) gehalten werden.

3. Steuerungsverfahren nach Anspruch 2, **dadurch gekennzeichnet, dass** die beiden Leistungselemente (T1, T2) durch ein über das Frequenzsteuersignal (F) aktiviertes Logiksignal (S) mit vordefiniertem Wert in einem Sperrzustand (OFF) gehalten werden.

4. Steuerungsverfahren nach einem der Ansprüche 1 bis 3, **dadurch gekennzeichnet, dass** das Frequenzsteuersignal (F) ein Rechtecksignal ist.

5. Vorrichtung zur Steuerung von zwei Leistungselementen (T1, T2), die zum Erzeugen eines elektrischen Wechselstroms (I) in einem Induktor (L) in Halbbrückenschaltung angeordnet sind, enthaltend Mittel (30) zum Ansteuern der beiden Leistungselemente (T1, T2) durch ein Frequenzsteuersignal (F), das dazu geeignet ist, die beiden Leistungselemente (T1, T2) jeweils abwechselnd in einen Durchgangszustand (ON) und einen Sperrzustand (OFF) zu versetzen, **dadurch gekennzeichnet, dass** die Ansteuermittel (30) dazu ausgebildet sind, in einem Schritt des Abschaltens des in dem Induktor (L) erzeugten elektrischen Wechselstroms (I) durch das Frequenzsteuersignal (F) eines der beiden Leistungselemente (T1 ; T2) in einem Durchgangszustand (ON) und das andere der beiden Leistungselemente (T2; T1) in einem Sperrzustand (OFF) zu halten, wobei das Frequenzsteuersignal (F) ein zwischen einem hohen Zustand und einem niedrigen Zustand wechselndes Signal ist, wobei das Frequenzsteuersignal (F) während des Schritts des Abschaltens des elektrischen Wechselstroms (I) in einem indifferent ausgewählten Zustand aus hohem Zustand und niedrigem Zustand gehalten wird.

6. Steuerungsvorrichtung nach Anspruch 5, **dadurch gekennzeichnet, dass** die Ansteuermittel (30) eine Schaltung (A) zum Aktivieren eines Logiksignals (S) in Abhängigkeit von dem Frequenzsteuersignal (F) enthalten, wobei die beiden Leistungselemente (T1, T2) bei einem vordefinierten Wert des Logiksignals (S) in einem Sperrzustand (OFF) gehalten werden.

7. Steuerungsvorrichtung nach Anspruch 6, **dadurch gekennzeichnet, dass** das Frequenzsteuersignal (F) ein zwischen einem hohen Zustand und einem niedrigen Zustand wechselndes Signal ist, wobei das Frequenzsteuersignal (F) durch die Ansteuerungsmittel (30) während des Schritts des Abschaltens des elektrischen Wechselstroms (I) in einem hohen Zustand oder einem niedrigen Zustand gehalten wird, wobei der vordefinierte Wert des Logiksignals (S) durch die Aktivierungsschaltung (A) aktiviert wird, wenn das Frequenzsteuersignal (F) in einem hohen Zustand oder einem niedrigen Zustand gehalten wird.

8. Induktionskochgerät mit mindestens einer Kochzone, die mit einem Induktor (L) ausgestattet ist, **dadurch gekennzeichnet, dass** es eine Steuerungsvorrichtung (30) nach einem der Ansprüche 5 bis 7 zum Steuern von zwei Leistungselementen (T1, T2) enthält, die zum Erzeugen eines elektrischen Wechselstroms (I) in dem Induktor (L) in Halbbrückenschaltung angeordnet sind.

9. Kochgerät nach Anspruch 8, **dadurch gekennzeichnet, dass** die Leistungselemente (T1, T2) IGBT-Komponenten sind.

## Claims

1. Method of controlling two power components (T1, T2) mounted in a half-bridge to generate an alternating electric current (I) in an inductor (L), comprising a step of driving said two power components (T1, T2) with a frequency control signal (F) configured to alternately set the two power components (T1, T2) respectively in a conducting state (ON) and a non-conducting state (OFF), **characterized in that** it comprises a step of extinguishing said alternating electric current (I) generated in the inductor (L), in which one of said two power components (T1 ; T2) is maintained in a conducting state (ON) and the other of said two power components (T2 ; T1) is maintained in a non-conducting state (OFF) by said frequency control signal (F), said frequency control signal (F) being a signal alternating between a high state and a low state, said frequency control signal (F) being maintained in a state chosen indiscriminately between the high state and the low state in the step of extinguishing said alternating electric current (I).

2. Controlling method according to claim 1, **characterized in that** it further comprises a step of placing said two power components (T1, T2) in security after said step of extinguishing the alternating electric current, in which said two power components (T1, T2) are maintained in a non-conducting state (OFF).

3. Controlling method according to claim 2, **characterized in that** said two power components (T1, T2) are maintained in a non-conducting state (OFF) by a logic signal (S) of predefined value, activated by said frequency control signal (F).

4. Controlling method according to one of claims 1 to 3, **characterized in that** said frequency control signal (F) is a square-wave signal.

5. Device for controlling two power components (T1, T2) mounted in a half-bridge to generate an alternating electric current (I) in an inductor (L), comprising driving means (30) for driving said two power components (T1, T2) by a frequency control signal (F) configured to alternately set the two power components (T1, T2) respectively in a conducting state (ON) and in a non-conducting state (OFF), **characterized in that** said driving means (30) are configured, at a step of extinguishing said alternating electric current (I) generated in said inductor (L), to maintain by said frequency control signal (F) one of said two power components (T1 ; T2) in a conducting state (ON) and the other of said two power components (T2 ; T1) in a non-conducting state (OFF), said frequency control signal (F) being a signal alternating between a high state and low state, the frequency control signal (F) being maintained in a state chosen indiscriminately between the high state and the low state by the driving means (30) in the step of extinguishing said alternating electric current (I).

6. Control device according to claim 5, **characterized in that** said driving means (30) comprise an activating circuit (A) for activating a logic signal (S) according to said frequency control signal (F), said two power components (T1, T2) being maintained in a non-conducting state (OFF) for a predefined value of said logic signal (S).

7. Control device according to claim 6, **characterized in that** said frequency control signal (F) is a signal alternating between a high state and a low state, the frequency control signal (F) being maintained in a high state or a low state by the driving means (30) at the step of extinguishing the alternating electric current (I), said predefined value of the logic signal (S) being activated by said activating circuit (A) when the frequency control signal (F) is maintained in a high state or a low state.

8. Induction cooking appliance comprising at least one cooking zone equipped with an inductor (L), **characterized in that** it comprises a control device (30) for controlling two power components (T1, T2) mounted in a half-bridge to generate an alternating electric current (I) in said inductor (L) in accordance with one of claims 5 to 7.

9. Cooking appliance according to claim 8, **characterized in that** said power components (T1, T2) are IGBT components.
